# FASCICULE DE BREVET EUROPEEN

(11) **EP 1 147 379 B1**
(45) Date de publication et mention de la délivrance du brevet: **26.10.2005**
(21) Numéro de dépôt: 99961145.2
(22) Date de dépôt: 22.12.1999
(51) Int. Cl.: G01D 11/28, G01D 13/22, G12B 11/04, B60Q 3/04

(54) **AIGUILLE POUR TABLEAU DE BORD DE VEHICULE AUTOMOBILE**
ZEIGER FÜR KRAFTFAHRZEUGARMATURENBRETT
MOTOR VEHICLE INDICATOR NEEDLE

(30) Priorité: 23.12.1998 FR 9816324
(43) Date de publication de la demande: 24.10.2001
(73) Titulaire: Magneti Marelli Systèmes Electroniques S.A.S, 92000 Nanterre (FR)
(72) Inventeur: CASTELLANI, Andréa, I-1007 Venaria Reale Turin (IT); ANGELINI, Marco, I-27021 Bereguardo (IT)
(74) Mandataire: Texier, Christian
(86) Numéro de dépôt international: PCT/FR1999/003253
(87) Numéro de publication internationale: WO 2000/039534

(56) Documents cités:
- DE-A- 3 425 029
- PATENT ABSTRACTS OF JAPAN vol. 096, no. 012, 26 décembre 1996 (1996-12-26) & JP 08 219820 A (YAZAKI CORP), 30 août 1996 (1996-08-30)

## Description

La présente invention concerne le domaine des indicateurs à aiguille, notamment pour tableaux de bord de véhicules automobiles.

La majorité des aiguilles proposées de nos jours pour des tableaux de bord de véhicules automobiles, comprennent un index formé d'un barreau type guide de lumière et un canon lié audit index, adapté pour être fixé sur un moyen d'entraînement tel qu'un logomètre ou un moteur pas à pas, et généralement adapté pour servir de prise d'entrée de lumière à partir d'une source lumineuse.

L'un des principaux problèmes rencontrés avec les aiguilles connues est la difficulté d'obtenir un éclairage homogène de l'index sur sa longueur à partir d'une zone d'entrée limitée au canon.

De nombreuses structures ont été proposées pour tenter d'accéder à un éclairage quasi homogène de l'index. Cependant à la connaissance de la Demanderesse, les tentatives actuelles n'ont pas été totalement couronnées de succès.

Le document Patent Abstracts of Japan volume 096 n°012 26 décembre 1996 et le document DE-A3425029 décrivent deux exemples d'aiguille connus comprenant un index et un canon, l'index comportant au moins une chambre en regard du canon.

Le but de la présente invention est de proposer de nouveaux moyens permettant d'améliorer l'homogénéité de l'éclairage des index d'aiguilles indicatrices, par rapport aux structures antérieures connues.

Ce but est atteint dans le cadre de la présente invention grâce à une aiguille dont l'index comporte une chambre borgne, incurvée, qui débouche sur la surface inférieure de l'index et qui couvre au moins le canon, dans son extension longitudinale.

Selon une autre caractéristique avantageuse de la présente invention, la chambre débouche en arrière du canon.

Selon une autre caractéristique avantageuse de la présente invention ladite chambre est concave vers le canon.

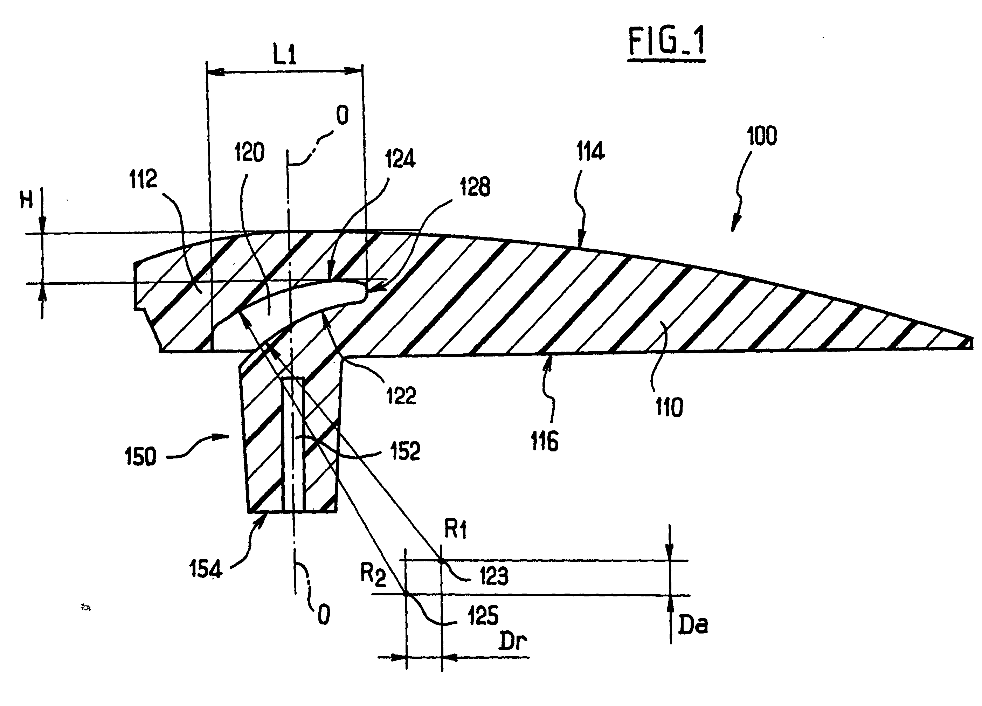

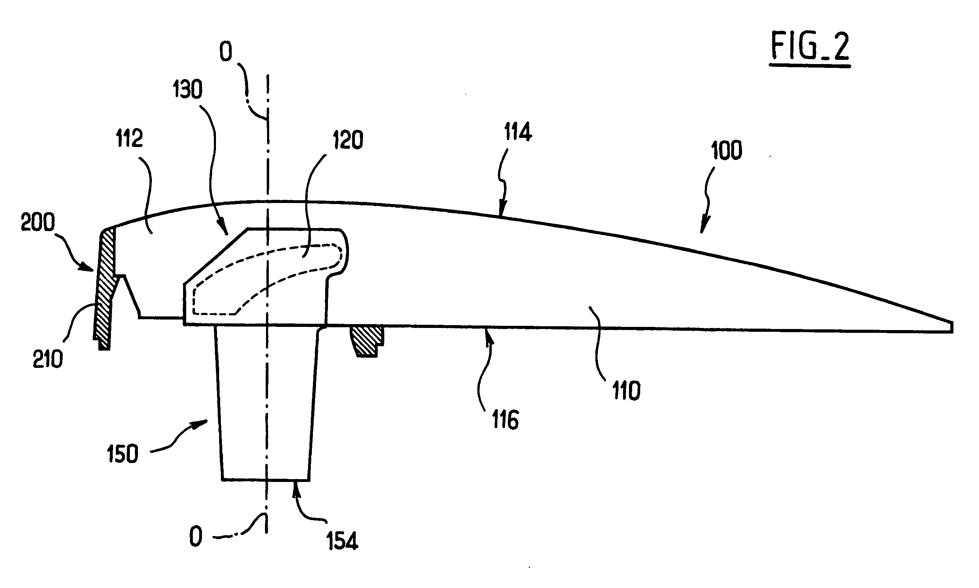

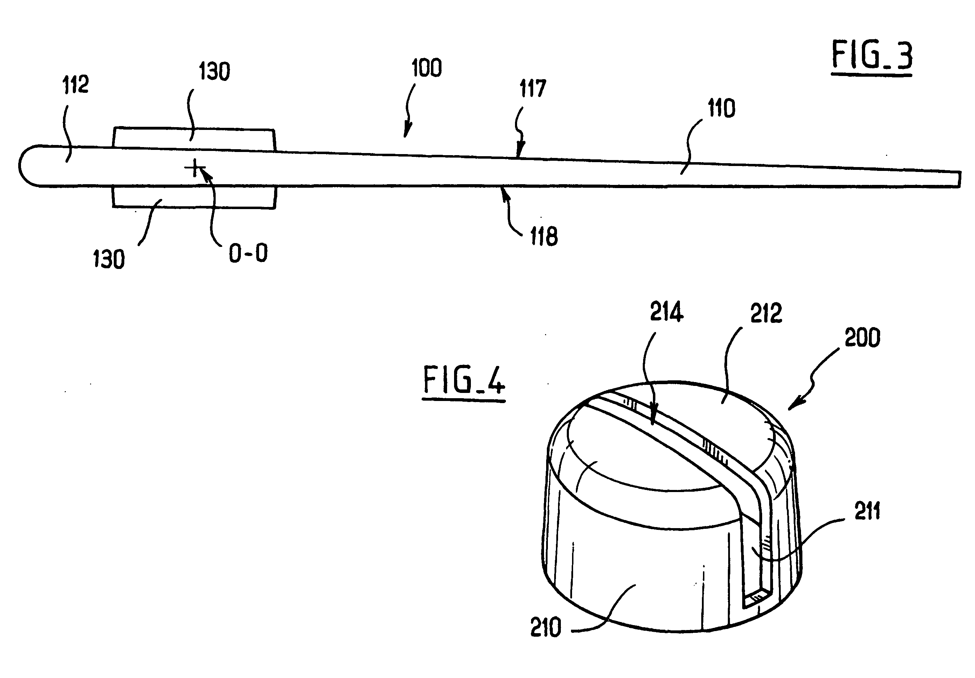

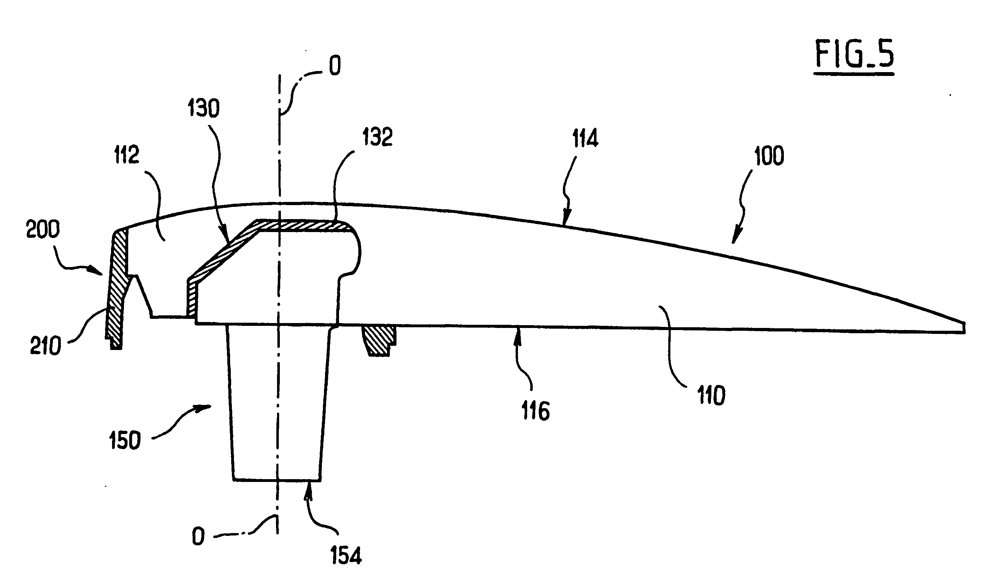

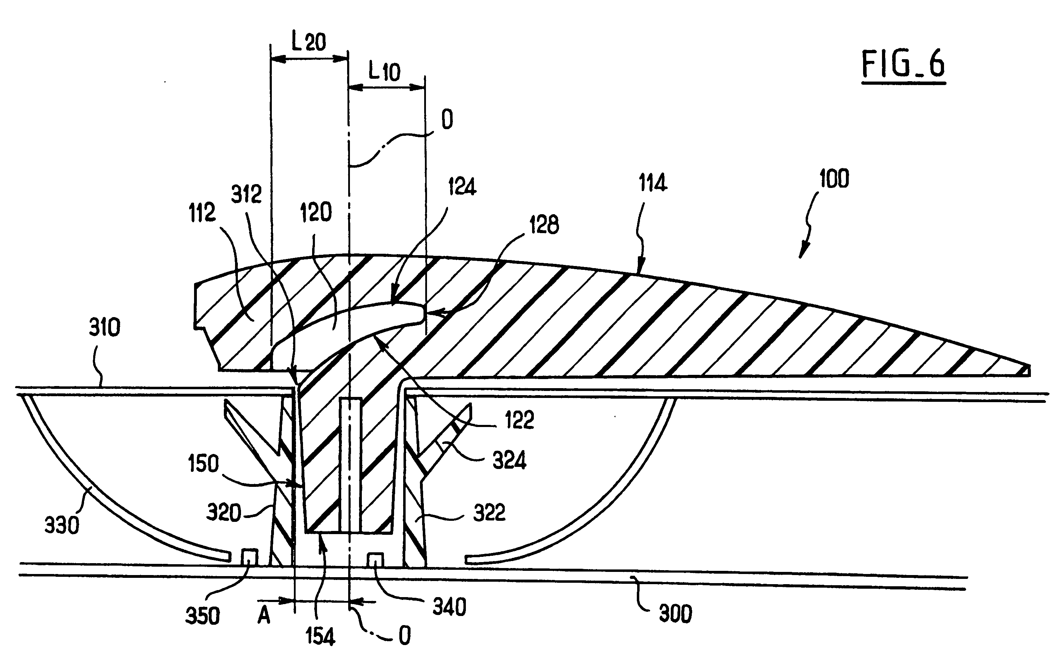

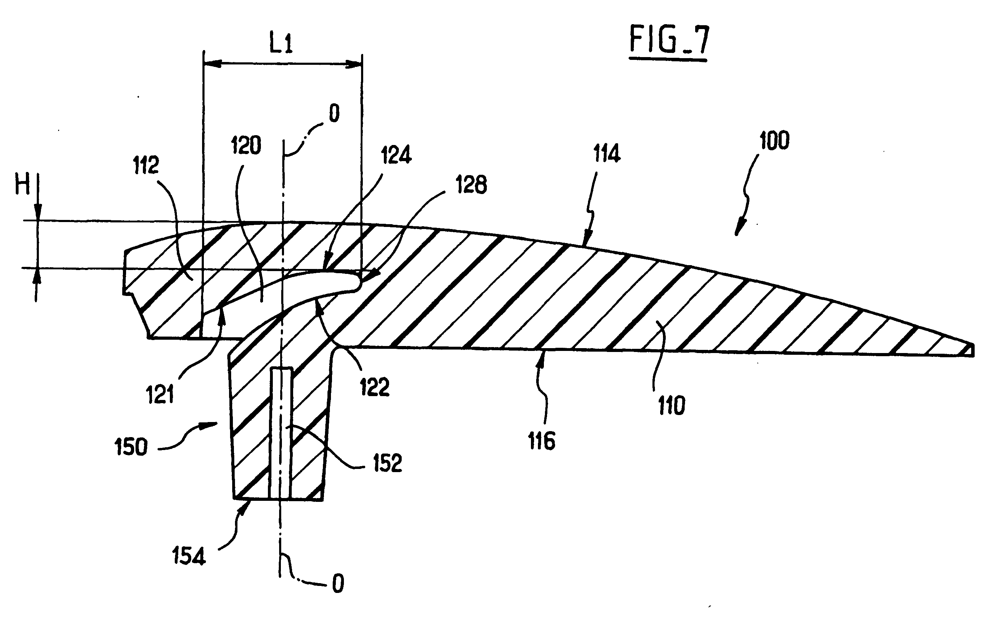

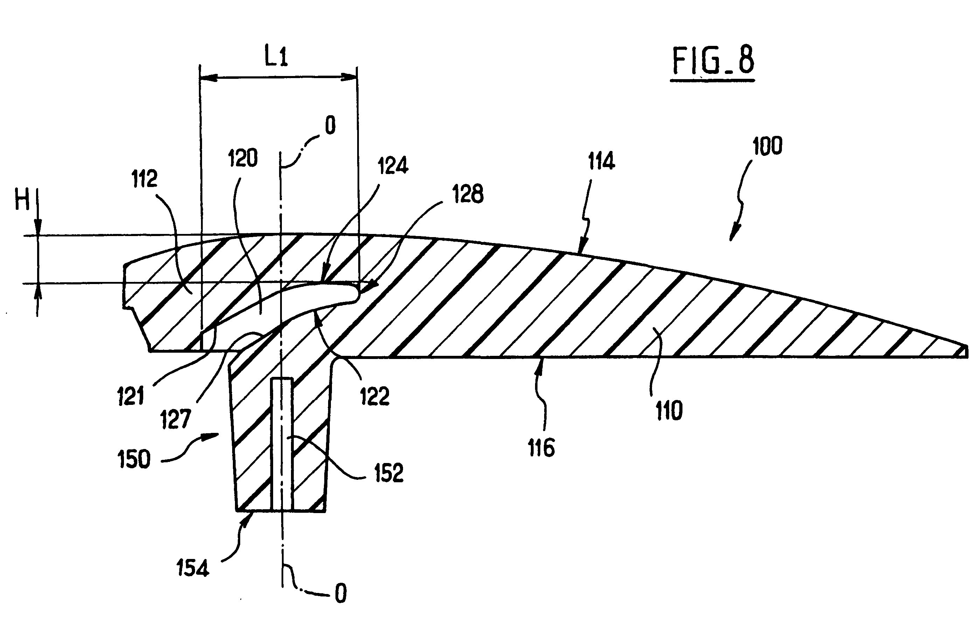

D'autres caractéristiques, buts et avantages de la présente invention apparaîtront à la lecture de la description détaillée qui va suivre et en regard des dessins annexés, donnés à titre d'exemples non limitatifs, et sur lesquels :
. la figure 1 représente une vue en coupe longitudinale d'une aiguille conforme à la présente invention ,
. la figure 2 représente une vue latérale extérieure de la même aiguille équipée d'un capuchon d'habillage,
. la figure 3 représente une vue de dessus de l'aiguille, sans son capuchon,
. la figure 4 représente une schématique en perspective d'un capuchon conforme à l'invention,
. la figure 5 représente une vue latérale extérieure similaire d'une aiguille conforme à une autre variante de la présente invention,
. la figure 6 représente une vue en coupe d'un indicateur comportant une telle aiguille, et
. les figures 7 et 8 représentent deux vues en coupe longitudinale, similaires à la figure 1, de deux aiguilles conformes à des variantes de réalisation de la présente invention.

On aperçoit sur la figure 1 annexée une aiguille 100 conforme à la présente invention comprenant un index 110 et un canon 150 qui lui est généralement transversal.

L'index 110 peut faire l'objet de nombreuses variantes dans sa géométrie.

De préférence l'index 110 est effilé en éloignement du canon 150. Par ailleurs comme on le voit sur la figure 1, l'index 110 peut s'étendre, sous forme d'un talon 112, en arrière du canon 150.

La face avant 114 de l'index 110 peut être- plane. Cependant de préférence, cette face avant 114 est incurvée, convexe vers l'avant, en éloignement du canon 150.

La face arrière 116 de l'index 110 peut également être plane ou incurvée.

Comme on le voit sur la figure 3, les flancs 117, 118, de l'index 110 convergent également de préférence en direction de la pointe de celui-ci. Ces flancs 117, 118, peuvent être plans ou par exemple incurvés, légèrement convexes vers l'extérieur.

Le canon 150 est centré sur un axe O-O généralement orthogonal à la direction longitudinale de l'index 110.

Le canon 150 peut être généralement effilé en éloignement de l'index 110, comme on le voit sur la figure 1.

De préférence le canon 150 est muni d'un alésage borgne 152 central, qui débouche sur sa face 154 opposée à l'index 110. Cet alésage 152 est adapté pour être chassé sur l'arbre de sortie d'un moyen moteur, tel qu'un logomètre ou un moteur pas à pas.

De préférence la face inférieure 154 du canon est plane et orthogonale à l'axe O-O. Ainsi le canon 150 peut recevoir un flux lumineux incident orienté parallèlement à l'axe O-O, en provenance de toutes sources lumineuses adéquates, sans déviation lors de la traversée de la face d'entrée 154.

Cependant le canon 150 peut être muni de tous moyens équivalents pour recevoir et guider parallèlement à l'axe O-O un flux lumineux. Ainsi en variante, le canon 150 peut être muni de moyens à effet de prisme adaptés pour dévier un flux lumineux d'incidence radiale, dans une direction parallèle à l'axe O-O, en direction de l'index 110.

Dans le cadre de la présente invention, comme on le voit sur la figure 1, l'index 110 est muni d'une chambre borgne 120. Celle-ci est incurvée, concave vers le canon 150.

Cette chambre 120 débouche sur la face inférieure ou arrière 116 de l'index 110. Plus précisément encore, la chambre 120 débouche en arrière du canon 150.

On notera que la chambre 120 ne débouche pas sur les flancs 117, 118 de l'index 110.

La chambre 120 couvre au moins le canon 150 dans son extension longitudinale. Cette extension longitudinale de la chambre 120 est référencée L1 sur la figure 1.

Elle correspond à la longueur de la chambre 120 dans la direction d'élongation de l'index 110, considéré dans un plan de projection perpendiculaire à l'axe O-O. On notera en effet à l'examen de la figure 1 que la chambre 120 s'étend au delà du canon 150 tant à l'arrière, côté talon 112, qu'à l'avant, côté effilé de l'index. Ainsi, on garantit que la chambre 120 intercepte les rayons lumineux provenant du canon 150.

De préférence, la chambre s'étend au delà du canon 150, tant à l'avant qu'à l'arrière, d'une amplitude comprise entre 1 et 5mm, préférentiellement 2 et 4mm et très avantageusement de l'ordre de 3mm.

L'aiguille 100 peut être réalisée en tout matériau approprié, optiquement transparent, apte à former un barreau guide de lumière. Il peut s'agir par exemple de polyméthylméthacrylate, ou de polycarbonate ou de tout matériau équivalent.

Plus précisément encore, de préférence, la chambre 120 est délimitée par deux surfaces latérales planes parallèles entre elles et parallèles au plan de la figure 1, une surface inférieure 122 et une surface supérieure 124.

La surface inférieure 122 est de préférence formée d'un secteur de cylindre de révolution délimité par une génératrice rectiligne perpendiculaire à l'axe du canon 150. Son rayon est référencé R1 sur la figure 1.

De façon similaire la surface supérieure 124 est de préférence formée d'un secteur de cylindre de révolution délimité par une génératrice rectiligne perpendiculaire à l'axe du canon 150. Son rayon est référencé R2 sur la figure 1.

De préférence le rayon R2 de la surface supérieure 124 est supérieur au rayon R1 de la surface inférieure 122.

Dans le cadre de la présente invention, de préférence, le rayon R2 de la surface supérieure 124 est supérieur au rayon R1 de la surface inférieure 122 de 1 à 3mm, avantageusement 1,5 à 2,5mm, très avantageusement de l'ordre de 2mm.

Dans le cadre de la présente invention, de préférence, le rayon R1 de la surface inférieure 122 est compris entre 8 et 18mm, avantageusement entre 10 et 16mm, tandis que le rayon R2 de la surface supérieure 124 est compris entre 10 et 20mm, avantageusement entre 12 et 18mm.

A titre d'exemple non limitatif, le rayon R1 de la surface inférieure 122 est de l'ordre de 13 mm, tandis que le rayon R2 de la surface supérieure 124 est de l'ordre de 15,2 mm.

Les centres des surfaces inférieure 122 et supérieure 124 sont référencés respectivement 123 et 125 sur la figure 1.

De préférence le centre 123 de la surface inférieure 122 ne coïncide pas avec le centre 125 de la surface supérieure 124. Plus précisément encore de préférence le centre 123 de la surface inférieure 122 est plus proche de l'index 110 que le centre 125 de la surface supérieure 124 et situé plus en avant que ce dernier.

Ainsi les surfaces inférieure 122 et supérieure 124 convergent légèrement vers l'avant de l'index 110. On notera que grâce à cette géométrie, la chambre 120 peut être réalisée sans difficulté, à l'aide d'un tiroir de géométrie complémentaire, lors du moulage de l'aiguille. -

Dans le cadre de l'invention de préférence, la distance radiale Dr (c'est-à-dire considérée perpendiculairement à l'axe O-O du canon 150) séparant les centres 123, 125 est comprise entre 1 et 4mm, avantageusement entre 2 et 3mm, tandis que la distance axiale Da (c'est-à-dire considérée dans une projection parallèle à l'axe O-O du canon 150) séparant les centres 123, 125 est comprise entre 0,4 et 1,4mm, avantageusement entre 0,7 et 1,1mm.

Plus précisément encore selon le mode de réalisation particulier et non limitatif illustré sur la figure 1 annexée, le centre 123 de la surface inférieure 122 est situé à 6,1 mm de l'axe O-O et à 9,2 mm de la surface inférieure 116 de l'index, tandis que le centre 125 de la surface supérieure 124 est situé à 3,8 mm de l'axe O-O et à 10,1 mm de la surface inférieure 116 de l'index

Par ailleurs le fond de la chambre 120 est délimitée de préférence par une calotte généralement hémicylindrique 128 délimitée par une génératrice rectiligne orthogonale aux surfaces latérales de la chambre 120. Cette calotte 128 se raccorde tangentiellement sur les surfaces inférieure 122 et supérieure 124.

Cette calotte 128 peut posséder par exemple un rayon de l'ordre de 0,7 mm.

La surface inférieure 122 a pour fonction principale de réfléchir une partie des rayons lumineux provenant du canon 150, en direction de l'index 110, vers l'avant de celui-ci.

La surface supérieure 124 de la chambre 120 a pour fonction principale de filtrer et d'homogénéiser le flux lumineux en provenance du canon 150 qui la traverse et qui parvient à la paroi avant 114 de l'index 110.

Ainsi grâce à la structure d'aiguille comprenant la chambre 120 conforme à la présente invention, on obtient un éclairage homogène de l'index 110 sur toute sa longueur, bien que l'entrée de lumière dans l'aiguille soit limitée à une zone très réduite correspondant à la section du canon 150.

De préférence l'aiguille 100 précitée est complétée par un capuchon opaque 200. Celui-ci peut faire l'objet de nombreuses variantes de réalisation. De préférence le capuchon 200 comprend une jupe cylindrique 210 centrée autour d'un axe généralement coaxial à l'axe du canon 150, et d'une paroi transversale 212 qui obture la jupe 210 à son extrémité avant.

La jupe 210 est munie d'une découpe 211, dans son secteur avant adjacent à la paroi transversale 212, complémentaire de la section droite de l'index 110 à ce niveau.

De plus la paroi transversale avant 212 du capuchon 200 possède une lumière longitudinale 214 complémentaire de la largeur de l'index 110.

Ainsi le capuchon entoure totalement l'index 110 , y compris le talon 112 de celui-ci, autour du canon 150. Le capuchon 200 interdit de ce fait toute fuite de lumière entre l'index 110 et ledit capuchon 200 et parfait l'esthétique de l'aiguille.

Le capuchon 200 peut être fixé sur l'aiguille 100 par tous moyens connus appropriés. Ces moyens ne seront donc pas décrits plus en détail par la suite.

Comme on le voit sur la figure 2, l'aiguille 100 peut comporter des joues latérales en saillie 130 sur l'index 110. Ces joues 130 forment une surépaisseur sur l'index 110 dans le prolongement du canon 150, en regard de la chambre 120. Ces joues 130 servent à renforcer l'index 110 malgré la présence de la chambre 120. De préférence les joues 130 ont une étendue latérale supérieure à celle de la chambre 120. Ainsi grâce à la présence des joues 130, de préférence la largeur de la chambre 120 est égale à la largeur de l'index 110. En d'autres termes la distance séparant les surfaces latérales de la chambre 120 est de préférence égale à la largeur de l'index 110. De ce fait il est garanti que la chambre 120 intercepte la totalité du flux lumineux provenant du canon 150.

Les joues 130 peuvent également participer à la fixation du capuchon 200.

Cependant de préférence les joues 130 peuvent être munies d'un revêtement 132 optiquement opaque sur leur surface avant pour limiter les fuites de lumière à ce niveau, comme on le voit sur la figure 5.

Selon encore une autre variante de réalisation, le capuchon 200 peut être surmoulé sur l'index 110. Dans le cadre de la présente invention, un tel surmoulage du capuchon 200 est facilité par le fait que l'index 110 ne comporte pas de cavités débouchant sur les flancs latéraux de l'index 110, contrairement à certaines aiguilles classiques.

On notera que selon le mode de réalisation particulier illustré sur les figures annexées, la surface inférieure 122 de la chambre 120 empiète en partie sur le sommet du canon 150, dans la zone arrière de celui-ci. On peut cependant envisager des variantes selon lesquelles la chambre 120 débouche totalement sur l'arrière du canon 150 et par conséquent n'empiète pas sur celui-ci.

Les inventeurs ont par ailleurs déterminé qu'il était souhaitable que la hauteur H de matériau de l'aiguille présent entre la surface supérieure 124 de la chambre 120 et la surface supérieure 114 de l'index soit au moins égale à 1 mm pour éviter des fuites de lumière néfastes.

On a illustré sur la figure 6 un exemple d'implantation de l'aiguille conforme à la présente invention dans un indicateur.

Sur cette figure 6 l'indicateur en question comprend en sus de la dite aiguille 100, un circuit imprimé 300, un cadran 310, une cheminée 320 assurant une fonction anti-fuite de lumière, une boîte à lumière 330, au moins une source lumineuse 340 portée par le circuit imprimé 300 pour éclairer l'aiguille 100 et au moins une source lumineuse 350 portée par le circuit imprimé 300 pour éclairer le cadran 310.

Le circuit imprimé 300 et le cadran 310 sont parallèles entre eux. Le circuit imprimé 300 est disposé en arrière du canon 150. Le cadran 310 quant à lui est placé juste derrière l'index 110. Comme on le voit sur la figure 6, le cadran 310 possède un orifice 312 pour le passage du canon 150. Le cadran 310 peut être formé en tout matériau approprié.

La cheminée 320 est réalisée en matériau opaque. Elle comprend une jupe 322 qui entoure le canon 150. La cheminée 320 s'étend entre la surface avant du circuit imprimé 300 et la surface arrière au cadran 310.

La source 340 supportée par le circuit imprimé 300 est placée à l'intérieur de la cheminée 320, en regard de la surface arrière 154 du canon 150. Ainsi la lumière émise par la source 340 est récupérée par le-canon 150 (éventuellement après réflexion sur la surface interne de la cheminée 320) et dirigée vers l'index 110.

Par ailleurs dans le cadre de la présente invention, le rayon interne A de la cheminée 320, au niveau de son extrémité adjacente au cadran 310, est inférieur à la distance L10 séparant le fond 128 de la chambre 120 et l'axe O-O et inférieur à la distance L 20 séparant cet axe O-O du bord du contour d'ouverture de la chambre 120 le plus éloigné de cet axe O-O.

De plus le diamètre 2A de la cheminée 320 au niveau de son extrémité adjacente au cadran 310 est inférieur à la largeur de la chambre 120 (considérée perpendiculairement au plan de la figure 6).

Grâce à ces dispositions on garantit que toute la lumière sortant de la cheminée est récupérée par la chambre 120. On évite ainsi toute fuite de lumière et tout point d'intensité trop intense sur l'aiguille.

La boîte à lumière 330 a pour fonction d'homogénéiser l'éclairage du cadran 310 à partir des sources 350 portées par le circuit imprimé 300 sur l'extérieur de la cheminée 320. Le cas échéant la cheminée 320 peut être munie sur sa surface externe de formes 324 (schématisées sur la figure 6) adaptées pour coopérer avec la boite à lumière 330 afin de parfaire l'homogénéité de l'éclairage du cadran 310 et récupérer une partie du flux émis par les sources 350.

Les sources 340 et 350 sont de préférence formées de diodes électroluminescentes.

Ainsi, notamment en variante, la chambre borgne 120 peut être délimitée partiellement par un tronçon ou méplat plan, au niveau de sa surface supérieure 124 et/ou de sa surface inférieure 122.

On a ainsi illustré sur la figure 7, une première variante selon laquelle la surface supérieure 124 de la chambre 120 comporte un tronçon plan 121.

On a illustré sur la figure 8, une autre variante selon laquelle la surface inférieure 122 de la chambre 120 comporte un tronçon plan 127 et la surface supérieure 124 de la chambre 120 comporte également un tronçon plan 121.

Bien évidemment, la chambre 120 peut comporter encore un nombre supérieur de tronçons plans 121 et/ou 127.

L'étendue et la localisation de ces tronçons peuvent faire l'objet de nombreuses variantes.

Elles ne seront donc pas décrites dans le détail par la suite.

## Revendications

1. Aiguille pour appareil indicateur de véhicule automobile, comprenant un canon (150) et un index (110) qui lui est transversal, lequel index (110) comporte une chambre (120) qui dans son extension longitudinale qui correspond à la direction d'élongation de l'index, couvre au moins le canon, **caractérisée par le fait que** la chambre (120) est borgne, incurvée, et débouche sur la surface inférieure (116) de l'index (110).

2. Aiguille selon la revendication 1, **caractérisée par le fait que** la chambre (120) débouche en arrière du canon (150).

3. Aiguille selon l'une des revendications 1 ou 2, **caractérisée par le fait que** ladite chambre (120) est concave vers le canon (150).

4. Aiguille selon l'une des revendications 1 à 3, **caractérisée par le fait que** la chambre (120) est délimitée par deux surfaces latérales, une surface inférieure (122) et une surface supérieure (124).

5. Aiguille selon l'une des revendications 1 à 4, **caractérisée par le fait que** les surfaces latérales de la chambre (120) sont planes et parallèles entre elles.

6. Aiguille selon l'une des revendications 1 à 5, **caractérisée par le fait que** la surface inférieure (122) de la chambre (120) est délimitée par un secteur de surface cylindrique de révolution.

7. Aiguille selon la revendication 6, **caractérisée par le fait que** la surface inférieure (122) de la chambre (120) est délimitée par une génératrice rectiligne perpendiculaire à l'axe du canon (150).

8. Aiguille selon l'une des revendications 1 à 7, **caractérisée par le fait que** la surface supérieure (124) de la chambre (120) est délimitée par un secteur de surface cylindrique de révolution.

9. Aiguille selon la revendication 8, **caractérisée par le fait que** la surface supérieure (124) de la chambre (120) est délimitée par une génératrice rectiligne perpendiculaire à l'axe du canon (150).

10. Aiguille selon l'une des revendications 1 à 9, **caractérisée par le fait que** la surface supérieure (124) de la chambre (120) possède un rayon (R2) supérieur à un rayon (R1) de la surface inférieure (122).

11. Aiguille selon l'une des revendications 1 à 10, **caractérisée par le fait que** la surface inférieure (122) de la chambre (120) a un rayon (R1) compris entre 8 et 18mm, avantageusement entre 10 et 16mm, tandis que la surface supérieure (124) a un rayon (R2) compris entre 10 et 20mm, avantageusement entre 12 et 18mm.

12. Aiguille selon l'une des revendications 1 à 11, **caractérisée par le fait que** la surface inférieure (122) de la chambre (120) a un rayon (R1) de l'ordre de 13 mm, tandis que la surface supérieure (124) a un rayon (R2) de l'ordre de 15,2 mm.

13. Aiguille selon l'une des revendications 1 à 12, **caractérisée par le fait que** la surface inférieure (122) de la chambre a un centre (123) qui ne coïncide pas avec un centre (125) de la surface supérieure (124).

14. Aiguille selon l'une des revendications 1 à 13, **caractérisée par le fait que** la surface inférieure (122) de la chambre (120) a un centre plus proche de l'index (110) qu'un centre (125) de la surface supérieure (124) et situé plus en avant que ce dernier.

15. Aiguille selon l'une des revendications 1 à 14, **caractérisée par le fait que** la distance radiale Dr séparant des centres (123, 125) des surfaces inférieure (122) et supérieure (124) de la chambre (120), est comprise entre 1 et 4mm, avantageusement entre 2 et 3mm, tandis que la distance axiale Da séparant les centres (123, 125) est comprise entre 0,4 et 1,4mm, avantageusement entre 0,7 et 1,1 mm.

16. Aiguille selon l'une des revendications 1 à 15, **caractérisée par le fait que** la surface inférieure (122) de la chambre (120) a un centre (123) situé à 6,1 mm de l'axe O-O et à 9,2 mm de la surface inférieure (116) de l'index, tandis que la surface supérieure (124) a un centre (125) situé à 3,8 mm de l'axe O-O et à 10,1 mm de la surface inférieure (116) de l'index.

17. Aiguille selon l'une des revendications 1 à 16, **caractérisée par le fait que** les surfaces inférieure (122) et supérieure (124) de la chambre (120) convergent vers l'avant de l'index (110).

18. Aiguille selon l'une des revendications 1 à 17, **caractérisée par le fait que** le fond de la chambre (120) est délimitée par une calotte généralement hémicylindrique (128).

19. Aiguille selon l'une des revendications 1 à 18, **caractérisée par le fait que** la surface inférieure (122) de la chambre (120) est adaptée pour réfléchir une partie des rayons lumineux provenant du canon (150), en direction de l'index (110), vers l'avant de celui-ci.

20. Aiguille selon l'une des revendications 1 à 19, **caractérisée par le fait que** la surface supérieure (124) de la chambre (120) est adaptée pour filtrer et homogénéiser le flux lumineux en provenance du canon (150) qui la traverse et qui parvient à la paroi avant (114) de l'index (110).

21. Aiguille selon l'une des revendications 1 à 20, **caractérisée par le fait qu'**elle comporte des joues latérales en saillie (130) sur l'index (110).

22. Aiguille selon la revendication 21, **caractérisée par le fait que** les joues (130) forment une surépaisseur sur l'index (110) dans le prolongement du canon (150), en regard de la chambre (120).

23. Aiguille selon l'une des revendications 21 ou 22, **caractérisée par le fait que** les joues (130) sont munies d'un revêtement (132) optiquement opaque sur leur surface avant.

24. Aiguille selon l'une des revendications 1 à 23, **caractérisée par le fait que** la largeur de la chambre (120) est égale à la largeur de l'index (110).

25. Aiguille selon l'une des revendications 1 à 24, **caractérisée par le fait qu'**elle comprend un capuchon opaque (200).

26. Aiguille selon l'une des revendications 1 à 25, **caractérisée par le fait que** le capuchon (200) est surmoulé sur l'index (110).

27. Aiguille selon l'une des revendications 1 à 26, **caractérisée par le fait que** la chambre (120) s'étend au delà du canon (150), tant à l'avant qu'à l'arrière, d'une amplitude comprise entre 1 et 5mm, préférentiellement 2 et 4mm et très avantageusement de l'ordre de 3mm.

28. Aiguille selon l'une des revendications 1 à 27, **caractérisée par le fait que** de la surface supérieure (124) de la chambre a un rayon (R2) supérieur à un rayon R1 de la surface inférieure (122) de 1 à 3mm, avantageusement 1,5 à 2,5mm, très avantageusement de l'ordre de 2mm.

29. Aiguille selon l'une des revendications 1 à 28, **caractérisée par le fait que** la hauteur (H) de matériau de l'aiguille présent entre la surface supérieure (124) de la chambre (120) et la surface supérieure (114) de l'index est au moins égale à 1 mm.

30. Aiguille selon l'une des revendications 1 à 29, **caractérisée par le fait que** la chambre borgne (120) est délimitée au moins partiellement par un tronçon ou méplat plan (121, 127) au niveau de sa surface supérieure (124) et/ou de sa surface inférieure (122).

31. Indicateur **caractérisé par le fait qu'**il comprend une aiguille conforme à l'une des revendications 1 à 30 associée à un cadran (310) et à au moins une source lumineuse (340).

32. Indicateur selon la revendication 31, **caractérisé par le fait qu'**il comprend en outre une cheminée (320) en matériau opaque comportant une jupe (322) qui entoure le canon (150).

33. Indicateur selon la revendication 32 **caractérisé par le fait qu'**il comprend au moins une source lumineuse (340) )placée à l'intérieur de la cheminée (320), en regard de la surface arrière (154) du canon (150).

34. Indicateur selon l'une des revendications 32 ou 33 **caractérisé par le fait que** le rayon interne (A) de la cheminée (320), au niveau de son extrémité adjacente au cadran (310), est inférieur à la distance (L10) séparant le fond (128) de la chambre (120) et l'axe (O-O) du canon et inférieur à la distance (L 20) séparant cet axe (O-O) du bord du contour d'ouverture de la chambre (120) le plus éloigné de cet axe (O-O).

35. Indicateur selon l'une des revendications 32 à 34 **caractérisé par** le fait le diamètre (2A) de la cheminée (320) au niveau de son extrémité adjacente au cadran (310) est inférieur à la largeur de la chambre (120).

## Patentansprüche

1. Zeigernadel für Kraftfahrzeuganzeigeinstrumente, die einen Schaft (150) und einen zu diesem quer verlaufenden Zeiger (110) umfaßt, wobei der Zeiger (110) eine Kammer (120) umfaßt, die in ihrer Längsausdehnung, die der Ausdehnungsrichtung des Zeigers entspricht, wenigstens den Schaft überdeckt, **dadurch gekennzeichnet, dass** die Kammer (120) nur einseitig offen ist, gekrümmt ist und auf die untere Fläche (116) des Zeigers (110) mündet.

2. Zeigernadel nach Anspruch 1, **dadurch gekennzeichnet, dass** die Kammer (120) hinter dem Schaft (150) mündet.

3. Zeigernadel nach einem der Ansprüche 1 oder 2, **dadurch gekennzeichnet, dass** die Kammer (120) zum Schaft (150) hin konkav ist.

4. Zeigernadel nach einem der Ansprüche 1 bis 3, **dadurch gekennzeichnet, dass** die Kammer (120) durch zwei Seitenflächen, eine untere Fläche (122) und eine obere Fläche (124) begrenzt wird.

5. Zeigernadel nach einem der Ansprüche 1 bis 4, **dadurch gekennzeichnet, dass** die Seitenflächen der Kammer (120) plan und zueinander parallel sind.

6. Zeigernadel nach einem der Ansprüche 1 bis 5, **dadurch gekennzeichnet, dass** die untere Fläche (122) der Kammer (120) durch einen Sektor einer Kreiszylinderfläche begrenzt ist.

7. Zeigernadel nach Anspruch 6, **dadurch gekennzeichnet, dass** die untere Fläche (122) der Kammer (120) durch eine geradlinige Erzeugende begrenzt ist, die senkrecht zur Achse des Schafts (150) verläuft.

8. Zeigernadel nach einem der Ansprüche 1 bis 7, **dadurch gekennzeichnet, dass** die obere Fläche (124) der Kammer (120) durch einen Sektor einer Kreiszylinderfläche begrenzt ist.

9. Zeigernadel nach Anspruch 8, **dadurch gekennzeichnet, dass** die obere Fläche (124) der Kammer (120) durch eine geradlinige Erzeugende begrenzt ist, die senkrecht zur Achse des Schafts (150) verläuft.

10. Zeigernadel nach einem der Ansprüche 1 bis 9, **dadurch gekennzeichnet, dass** die obere Fläche (124) der Kammer (120) einen Radius (R2) hat, der größer als ein Radius (R1) der unteren Fläche (122) ist.

11. Zeigernadel nach einem der Ansprüche 1 bis 10, **dadurch gekennzeichnet, dass** die untere Fläche (122) der Kammer (120) einen Radius (R1) hat, der zwischen 8 und 18 mm und vorteilhafterweise zwischen 10 und 16 mm liegt, wohingegen die obere Fläche (124) einen Radius (R2) hat, der zwischen 10 und 20 mm und vorteilhafterweise zwischen 12 und 18 mm liegt.

12. Zeigernadel nach einem der Ansprüche 1 bis 11, **dadurch gekennzeichnet, dass** die untere Fläche (122) der Kammer (120) einen Radius (R1) in der Größenordnung von 13 mm hat, wohingegen die obere Fläche (124) einen Radius (R2) in der Größenordnung von 15,2 mm hat.

13. Zeigernadel nach einem der Ansprüche 1 bis 12, **dadurch gekennzeichnet, dass** die untere Fläche (122) der Kammer einen Mittelpunkt (123) hat, der nicht mit einem Mittelpunkt (125) der oberen Fläche (124) zusammenfällt.

14. Zeigernadel nach einem der Ansprüche 1 bis 13, **dadurch gekennzeichnet, dass** die untere Fläche (122) der Kammer (120) einen Mittelpunkt hat, der näher am Zeiger (110) liegt als ein Mittelpunkt (125) der oberen Fläche (124) und der weiter vorne als dieser letztere liegt.

15. Zeigernadel nach einem der Ansprüche 1 bis 14, **dadurch gekennzeichnet, dass** der radiale Abstand Dr, der die Mittelpunkte (123, 125) der unteren (122) und der oberen (124) Fläche der Kammer (120) trennt, zwischen 1 und 4 mm und vorteilhafterweise zwischen 2 und 3 mm liegt, wohingegen der axiale Abstand Da, der die Mittelpunkte (123, 125) trennt, zwischen 0,4 und 1,4 mm und vorteilhafterweise zwischen 0,7 und 1,1 mm liegt.

16. Zeigernadel nach einem der Ansprüche 1 bis 15, **dadurch gekennzeichnet, dass** die untere Fläche (122) der Kammer (120) einen Mittelpunkt (123) hat, der 6,1 mm von der Achse O-O und 9,2 mm von der unteren Fläche (116) des Zeigers entfernt angeordnet ist, wohingegen die obere Fläche (124) einen Mittelpunkt (125) hat, der 3,8 mm von der Achse O-O und 10,1 mm von der unteren Fläche (116) des Zeigers entfernt angeordnet ist.

17. Zeigernadel nach einem der Ansprüche 1 bis 16, **dadurch gekennzeichnet, dass** die untere (122) und die obere (124) Fläche der Kammer (120) zum vorderen Ende des Zeigers (110) hin zusammenlaufen.

18. Zeigernadel nach einem der Ansprüche 1 bis 17, **dadurch gekennzeichnet, dass** der Boden der Kammer (120) durch eine im wesentlichen hemizylindrisch gewölbte Fläche (128) begrenzt ist.

19. Zeigernadel nach einem der Ansprüche 1 bis 18, **dadurch gekennzeichnet, dass** die untere Fläche (122) der Kammer (120) dafür eingerichtet ist, einen Teil der vom Schaft (150) kommenden Lichtstrahlen, die in Richtung des Zeigers (110) laufen, zu dessen vorderem Ende hin zu reflektieren.

20. Zeigernadel nach einem der Ansprüche 1 bis 19, **dadurch gekennzeichnet, dass** die obere Fläche (124) der Kammer (120) dafür eingerichtet ist, den vom Schaft (150) kommenden Lichtfluß, der durch sie hindurch läuft und der die vordere Wand (114) des Zeigers (110) erreicht, zu filtern und zu homogenisieren.

21. Zeigernadel nach einem der Ansprüche 1 bis 20, **dadurch gekennzeichnet, dass** sie hervorstehende Seitenteile (130) auf dem Zeiger (110) umfaßt.

22. Zeigernadel nach Anspruch 21, **dadurch gekennzeichnet, dass** die Seitenteile (130) auf dem Zeiger (110) in Verlängerung des Schafts (150) und auf Höhe der Kammer (120) eine Verdickung bilden.

23. Zeigernadel nach einem der Ansprüche 21 oder 22, **dadurch gekennzeichnet, dass** die Seitenteile (130) auf ihrer vorderen Fläche mit einer optisch undurchsichtigen Beschichtung (132) ausgestattet sind.

24. Zeigernadel nach einem der Ansprüche 1 bis 23, **dadurch gekennzeichnet, dass** die Breite der Kammer (120) gleich der Breite des Zeigers (110) ist.

25. Zeigernadel nach einem der Ansprüche 1 bis 24, **dadurch gekennzeichnet, dass** sie eine undurchsichtige Kappe (200) umfaßt.

26. Zeigernadel nach einem der Ansprüche 1 bis 25, **dadurch gekennzeichnet, dass** die Kappe (200) auf den Zeiger (110) aufgepreßt ist.

27. Zeigernadel nach einem der Ansprüche 1 bis 26, **dadurch gekennzeichnet, dass** die Kammer (120) sich vorne wie hinten über den Schaft (150) hinaus erstreckt, mit einem Maß, das zwischen 1 und 5 mm und vorteilhafterweise zwischen 2 und 4 mm liegt und das besonders vorteilhaft in der Größenordnung von 3 mm liegt.

28. Zeigernadel nach einem der Ansprüche 1 bis 27, **dadurch gekennzeichnet, dass** die obere Fläche (124) der Kammer einen Radius (R2) hat, der um 1 bis 3 mm, vorteilhafterweise um 1,5 bis 2,5 mm und besonders vorteilhaft in der Größenordnung von 2 mm größer ist als ein Radius R1 der unteren Fläche (122).

29. Zeigernadel nach einem der Ansprüche 1 bis 28, **dadurch gekennzeichnet, dass** die Materialhöhe (H) der Zeigernadel, die zwischen der oberen Fläche (124) der Kammer (120) und der oberen Fläche (114) des Zeigers liegt, wenigstens 1 mm beträgt.

30. Zeigernadel nach einem der Ansprüche 1 bis 29, **dadurch gekennzeichnet, dass** die nur einseitig offene Kammer (120) wenigstens teilweise durch einen planen Abschnitt oder eine plane Abflachung (121, 127) im Bereich ihrer oberen (124) und/oder ihrer unteren (122) Fläche begrenzt ist.

31. Anzeigeinstrument, **dadurch gekennzeichnet, dass** es eine Zeigernadel gemäß einem der Ansprüche 1 bis 30 umfaßt, zu der ein Zifferblatt (310) und wenigstens eine Lichtquelle (340) gehört.

32. Anzeigeinstrument nach Anspruch 31, **dadurch gekennzeichnet, dass** es außerdem einen Schacht (320) aus einem undurchsichtigen Material umfaßt, der eine Schürze (322) umfaßt, die den Schaft (150) umgibt.

33. Anzeigeinstrument nach Anspruch 32, **dadurch gekennzeichnet, dass** es wenigstens eine Lichtquelle (340) umfaßt, die die im Inneren des Schachts (320), gegenüber der hinteren Fläche (154) des Schafts (150) angeordnet ist.

34. Anzeigeinstrument nach einem der Ansprüche 32 oder 33, **dadurch gekennzeichnet, dass** der Innenradius (A) des Schachts (320) im Bereich seines zum Zifferblatt (310) benachbarten Endes kleiner ist als der Abstand (L10), der den Boden (128) der Kammer (120) von der Achse (O-O) des Schafts trennt, und kleiner als der Abstand (L20), der diese Achse (O-0) von dem Rand der Kontur der Öffnung der Kammer (120) trennt, der am weitesten von dieser Achse (O-O) entfernt liegt.

35. Anzeigeinstrument nach einem der Ansprüche 32 bis 34, **dadurch gekennzeichnet, dass** der Durchmesser (2A) des Schachts (320) im Bereich seines zum Zifferblatt (310) benachbarten Endes kleiner ist als die Breite der Kammer (120).

## Claims

1. Needle for motor vehicle indicator device, comprising a barrel (150) and a pointer (110) which is transverse to it, which pointer (110) comprises a chamber (120) which, in its longitudinal extension which corresponds to the direction of elongation of the pointer, covers at least the barrel, **characterized in that** the chamber (120) is blind, incurvated, and opens onto the bottom surface (116) of the pointer (110).

2. Needle according to Claim 1, **characterized in that** the chamber (120) opens behind the barrel (150).

3. Needle according to one of Claims 1 or 2, **characterized in that** the said chamber (120) is concave towards the barrel (150).

4. Needle according to one of Claims 1 to 3, **characterized in that** the chamber (120) is delimited by two lateral surfaces, a bottom surface (122) and a top surface (124).

5. Needle according to one of Claims 1 to 4, **characterized in that** the lateral surfaces of the chamber (120) are level and parallel with one another.

6. Needle according to one of Claims 1 to 5, **characterized in that** the bottom surface (122) of the chamber (120) is delimited by a sector with an axi-symmetric cylindrical surface.

7. Needle according to Claim 6, **characterized in that** the bottom surface (122) of the chamber (120) is delimited by a rectilinear generatrix perpendicular to the axis of the barrel (150).

8. Needle according to one of Claims 1 to 7, **characterized in that** the top surface (124) of the chamber (120) is delimited by a sector with an axi-symmetric cylindrical surface.

9. Needle according to Claim 8, **characterized in that** the top surface (124) of the chamber (120) is delimited by a rectilinear generatrix perpendicular to the axis of the barrel (150).

10. Needle according to one of Claims 1 to 9, **characterized in that** the top surface (124) of the chamber (120) has a radius (R2) greater than a radius (R1) of the bottom surface (122).

11. Needle according to one of Claims 1 to 10, **characterized in that** the bottom surface (122) of the chamber (120) has a radius (R1) lying between 8 and 18 mm, advantageously between 10 and 16 mm, while the top surface (124) has a radius (R2) lying between 10 and 20 mm, advantageously between 12 and 18 mm.

12. Needle according to one of Claims 1 to 11, **characterized in that** the bottom surface (122) of the chamber (120) has a radius (R1) of the order of 13 mm, while the top surface (124) has a radius (R2) of approximately 15.2 mm.

13. Needle according to one of Claims 1 to 12,
**characterized in that** the bottom surface (122) of the chamber has a centre (123) which does not coincide with a centre (125) of the top surface (124).

14. Needle according to one of Claims 1 to 13, **characterized in that** the bottom surface (122) of the chamber (120) has a centre closer to the pointer (110) than a centre (125) of the top surface (124) and situated further forward than the latter.

15. Needle according to one of Claims 1 to 14, **characterized in that** the radial distance Dr separating the centres (123, 125) from the bottom surface (122) and top surface (124) of the chamber (120) lies between 1 and 4 mm, advantageously between 2 and 3 mm, while the axial distance Da separating the centres (123, 125) lies between 0.4 and 1.4 mm, advantageously between 0.7 and 1.1 mm.

16. Needle according to one of Claims 1 to 15, **characterized in that** the bottom surface (122) of the chamber (120) has a centre (123) situated 6.1 mm from the axis O-O and 9.2 mm from the bottom surface (116) of the pointer, while the top surface (124) has a centre (125) situated 3.8 mm from the axis O-O and 10.1 mm from the bottom surface (116) of the pointer.

17. Needle according to one of Claims 1 to 16, **characterized in that** the bottom surface (122) and top surface (124) of the chamber (120) converge towards the front of the pointer (110).

18. Needle according to one of Claims 1 to 17, **characterized in that** the base of the chamber (120) is delimited by a generally semicylindrical dome (128).

19. Needle according to one of Claims 1 to 18, **characterized in that** the bottom surface (122) of the chamber (120) is suitable for reflecting a portion of the light rays originating from the barrel (150), in the direction of the pointer (110), towards the front of the latter.

20. Needle according to one of Claims 1 to 19, **characterized in that** the top surface (124) of the chamber (120) is suitable for filtering and homogenizing the light flow originating from the barrel (150) which passes through it and which reaches the front wall (114) of the pointer (110).

21. Needle according to one of Claims 1 to 20, **characterized in that** it comprises protruding lateral cheeks (130) on the pointer (110).

22. Needle according to Claim 21, **characterized in that** the cheeks (130) form an extra thickness on the pointer (110) in the extension of the barrel (150), opposite the chamber (120).

23. Needle according to one of Claims 21 or 22, **characterized in that** the cheeks (130) are furnished with an optically opaque coating (132) on their front surface.

24. Needle according to one of Claims 1 to 23, **characterized in that** the width of the chamber (120) is equal to the width of the pointer (110).

25. Needle according to one of Claims 1 to 24, **characterized in that** it comprises an opaque cap (200).

26. Needle according to one of Claims 1 to 25, **characterized in that** the cap (200) is overmoulded onto the pointer (110).

27. Needle according to one of Claims 1 to 26, **characterized in that** the chamber (120) extends beyond the barrel (150), both forwards and rearwards, by an amount lying between 1 and 5 mm, preferably 2 and 4 mm and very advantageously of the order of 3 mm.

28. Needle according to one of Claims 1 to 27, **characterized in that** the top surface (124) of the chamber has a radius (R2) greater than a radius R1 of the bottom surface (122) by 1 to 3 mm, advantageously 1.5 to 2.5 mm, very advantageously of the order of 2 mm.

29. Needle according to one of Claims 1 to 28, **characterized in that** the height (H) of material of the needle present between the top surface (124) of the chamber (120) and the top surface (114) of the pointer is at least equal to 1 mm.

30. Needle according to one of Claims 1 to 29, **characterized in that** the blind chamber (120) is at least partially delimited by a level section or flat (121, 127) at its top surface (124) and/or at its bottom surface (122).

31. Indicator **characterized in that** it comprises a needle according to one of Claims 1 to 30 associated with a dial (310) and at least one light source (340).

32. Indicator according to Claim 31, **characterized in that** it also comprises a shaft (320) made of opaque material comprising a skirt (322) which surrounds the barrel (150).

33. Indicator according to Claim 32, **characterized in that** it comprises at least one light source (340) placed inside the shaft (320), opposite the rear surface (154) of the barrel (150).

34. Indicator according to one of Claims 32 or 33, **characterized in that** the internal radius (A) of the shaft (320), at its end adjacent to the dial (310), is less than the distance (L10) separating the base (128) of the chamber (120) and the axis (O-O) of the barrel and less than the distance (L20) separating this axis (O-O) from the edge of the opening contour of the chamber (120) furthest from this axis (O-O).

35. Indicator according to one of Claims 32 to 34, **characterized in that** the diameter (2A) of the shaft (320) at its end adjacent to the dial (310) is less than the width of the chamber (120).
